# FASCICULE DE BREVET EUROPEEN

(11) **EP 0 698 196 B1**
(45) Date de publication et mention de la délivrance du brevet: **20.08.1997**
(21) Numéro de dépôt: 94915606.1
(22) Date de dépôt: 10.05.1994
(51) Int. Cl.: F16M 13/04, G03B 15/00

(54) **EQUIPEMENT DE PRISE DE VUES A DISTANCE**
BILDAUFNAHMEVORRICHTUNG MIT FERNSTEUERUNG
REMOTE FILMING EQUIPMENT

(30) Priorité: 10.05.1993 FR 9305563
(43) Date de publication de la demande: 28.02.1996
(73) Titulaire: MERIAUX-DELBARRE, Romain, F-92300 Levallois-Perret (FR)
(72) Inventeur: MERIAUX-DELBARRE, Romain, F-92300 Levallois-Perret (FR)
(86) Numéro de dépôt international: FR9400550
(87) Numéro de publication internationale: WO9427084

(56) Documents cités:
- AU-B- 6 984 981
- FR-A- 442 389
- FR-A- 2 611 826
- FR-A- 2 628 180
- US-A- 4 083 480
- US-A- 4 298 149
- US-A- 4 438 763
- US-A- 4 672 436
- US-A- 5 065 249
- PATENT ABSTRACTS OF JAPAN vol. 10, no. 101 (P-447) 17 Avril 1986 & JP,A,60 233 639 (KIYOYASU IZUTSUYA) 20 Novembre 1985
- PATENT ABSTRACTS OF JAPAN vol. 9, no. 321 (E-367) 17 Décembre 1985 & JP,A,60 154 701 (NIPPON DENSO) 14 Août 1985
- PATENT ABSTRACTS OF JAPAN vol. 16, no. 546 (E-1291) 16 Novembre 1992 & JP,A,04 207 592 (VICTOR CO.) 29 Juillet 1992

## Description

La présente invention concerne un équipement de prise de vues par une caméra, pour leur enregistrement cinématographique ou vidéo.

Dans le domaine de la prise de vues, il est souvent recherché, à des fins d'effets particuliers, de dominer une scène et de devoir donc filmer en plongée. Ceci est parfois également imposé par certaines conditions de tournage, comme par exemple le filmage dans une foule ou lors d'un événement sportif.

Il est connu pour cela des dispositifs tels qu'une plate-forme surélevée sur laquelle est disposée la caméra, et qui est solidaire d'un chariot roulant selon une trajectoire prédéterminée.

Il a également été proposé de remplacer de telles plates-formes par un bras télescopique rétractable pendant le transport et déployable sur le site, ce bras télescopique étant solidaire d'un chariot roulant pour permettre son déplacement.

Un dispositif de ce genre est illustré par la demande de brevet français N°2.611.826.

Si le bras décrit dans cette demande offre sans doute de bons résultats pour un tournage ne nécessitant pas des déplacements importants, comme par exemple sur un plateau ou en extérieur pour une scène relativement statique, il n'en est pas de même pour le filmage par exemple de certains événement sportifs tels que courses de vélos, automobiles, à pieds, etc., nécessitant un déplacement au moins aussi rapide que les concurrents à filmer, et une autonomie complète du matériel utilisé.

La solution classique consiste à disposer d'une caméra portative qu'un opérateur tient à la main ou sur l'épaule, mais cela n'offre pas les prises de vues en plongée nécessaires ou recherchées.

On peut tenter alors de filmer en aveugle en tenant la caméra à bout de bras, mais on comprend aisément que le résultat ne saurait être garanti et qu'une telle solution ne permet aucun contrôle de réglage de l'objectif en fonction de la focale et de la netteté à obtenir.

En fait, on se trouve actuellement en face d'un choix conduisant soit vers un matériel de prise de vues très sophistiqué donnant de bons résultats, mais limité en autonomie du fait de sa faible mobilité et des moyens à mettre en oeuvre pour leur utilisation, soit vers un matériel portable dont la mise en oeuvre pour des prises de vues en plongée oblige souvent l'opérateur à recourir à des moyens de fortune conduisant parfois à mettre en jeu sa propre sécurité.

Une solution a été proposée et décrite dans le brevet américain N°5.065.249 pour remédier à ces inconvénients, et concerne à cet effet un équipement de prise de vues par une caméra pour leur enregistrement cinématographique ou vidéo, laquelle est disposée à l'extrémité d'une perche apte à être tenue manuellement par un opérateur, à la portée duquel sont mis des moyens de télécommande de ladite caméra pour permettre son réglage, à une distance au moins supérieure à la longueur de son bras, selon l'un au moins de ses axes d'orientation en azimut et/ou en site en cours de filmage. Néanmoins, avec un tel équipement, il reste très difficile d'assurer le réglage précité, selon une position relativement stable de la perche par rapport au corps de l'opérateur tout en laissant à celui-ci toute liberté de déplacement. En effet, selon le brevet américain précité, la perche est conçue pour prendre appui sur le sol.

La présente invention a pour but d'atteindre cet objectif et conceme à cet effet un équipement du type précité caractérisé en ce qu'il comprend des moyens aptes à rendre auto-portables ses différents éléments constitutifs selon une position relativement stable de la perche par rapport au corps de l'opérateur tout en laissant à celui-ci toute liberté de déplacement, lesquels moyens sont constitués par un harnais sanglant le buste de l'opérateur et sur la partie inférieure antérieure duquel est ménagé un support, sur lequel repose la base de la perche de manière telle que la tenue de celle-ci par rapport au harnais puisse être assurée par au plus une main de l'opérateur, l'autre au moins restant libre pour assurer les différentes opérations de commande à distance de la caméra.

Des caméras légères et d'encombrement réduit existent bien dans le commerce et trouveront une application particulièrement favorable dans le cadre de la présente invention. Celle-ci sera mieux comprise et d'autres caractéristiques seront mises en évidence à l'aide de la description qui suit, en référence aux dessins schématiques annexés, illustrant, à titre d'exemple non limitatif, comment l'invention peut être réalisée, et dans lesquels :

La figure 1 est une vue d'un équipement selon l'invention pour la réalisation de prises de vues à distance à partir d'une perche, par un opérateur représenté schématiquement en position active de filmage.

La figure 2 est une vue d'un équipement selon l'invention montrant schématiquement les organes d'asservissement et de commande ainsi que leur câblage électrique.

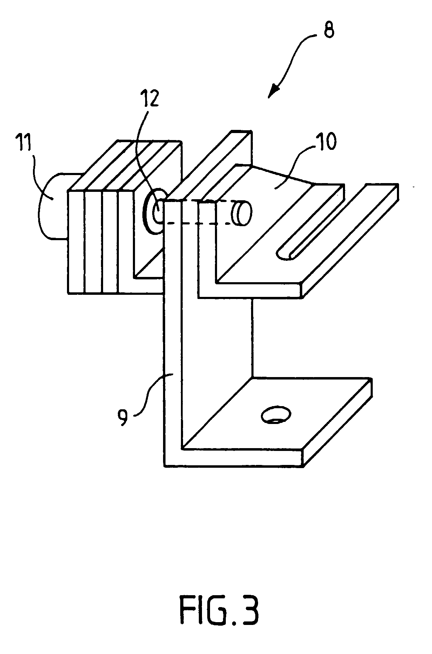

La figure 3 est une vue d'un support mobile de caméra disposé à l'extrémité libre de la perche, selon un exemple de réalisation.

La figure 4 est une vue d'un équipement de prises de vues selon une variante de réalisation.

La figure 5 est une vue de détail montrant un exemple de fixation de deux sangles de soutien de la perche.

La figure 6 est une vue de détail montrant la fixation des sangles sur un harnais.

La figure 7 est une vue schématique d'un harnais.

La figure 8 est une vue de détail d'un système d'amortissement de la perche.

La figure 9 est une variante de réalisation du système selon la figure 8.

La figure 10 est une variante de réalisation regroupant les systèmes des figures 8 et 9.

Les figures 11 et 12 sont des vues représentant un dispositif de compensation du poids de la perche.

La figure 13 est une vue d'un guidon de commande associé à la perche.

Les figures 14 et 15 sont des vues de détail à échelle agrandie des poignées de commande du guidon selon la figure 13.

La figure 16 est une vue d'un viseur oculaire, associé à l'équipement selon l'invention.

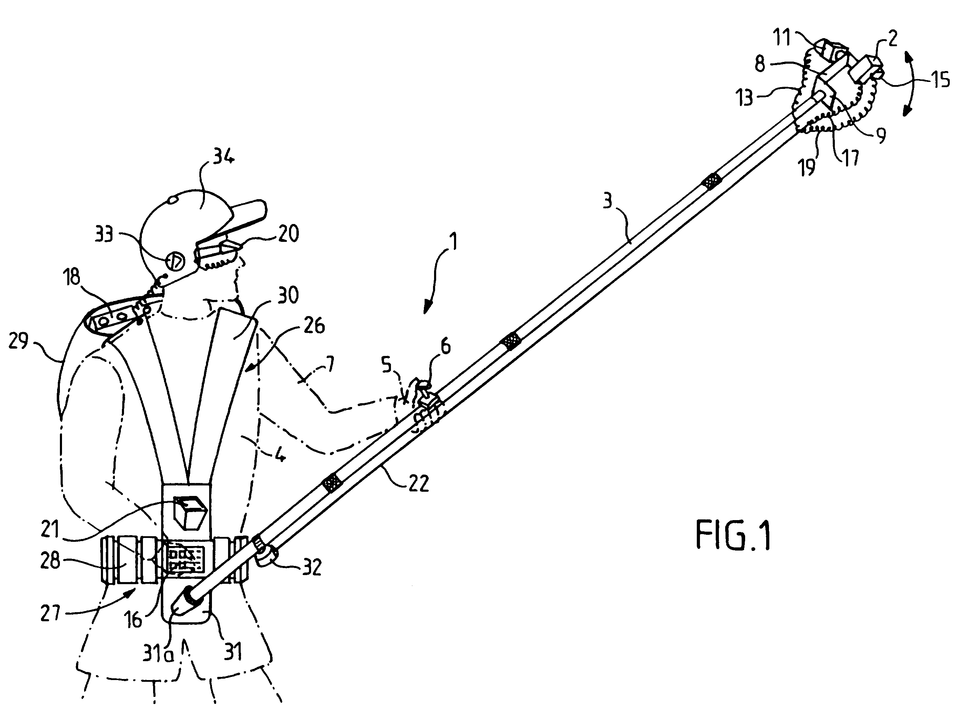

L'équipement de prise de vues 1, désigné globalement sur la figure 1, est constitué par une caméra légère 2 disposée à l'extrémité d'une perche 3 libre et apte à être tenue manuellement par un opérateur 4 par une seule de ses mains 5.

L'opérateur 4 dispose à sa portée de moyens de télécommande 6 de la caméra 2 pour permettre son réglage à une distance supérieure à celle de son bras 7.

Ces moyens de télécommande 6 ont pour but d'assurer la manoeuvre de la caméra 2 selon l'un au moins de ses axes d'orientation en azimut, c'est à dire de droite à gauche dans un plan horizontal par rapport au même opérateur et/ou en site, c'est à dire de haut en bas sur un plan vertical, donc en plongée par rapport au même opérateur.

Les moyens développés dans l'invention permettent de tels mouvements selon une position relativement stable de la perche 3 par rapport au corps de l'opérateur 4 tout en lui laissant toute liberté de déplacement par tous moyens, motorisés ou non.

Selon un exemple de réalisation non limitatif, la caméra 2 est disposée à l'extrémité de la perche 3 par l'intermédiaire d'un support 8 dont une partie fixe 9 est solidaire de ladite extrémité alors qu'une partie mobile 10, apte à pivoter en azimut et/ou en site par rapport à la partie fixe 9, porte la caméra 2 et assure son orientation par l'intermédiaire d'un organe d'asservissement 11 assujetti par les moyens de télécommande 6, se trouvant à disposition de l'opérateur 4.

En l'occurrence, seul a été représenté sur les figures un moyen d'orientation en site de manière à simplifier la compréhension.

Dans le présent exemple, l'organe d'asservissement 11 est un moto réducteur électrique solidaire de la partie fixe 9 du support 8 et dont l'arbre rotatif de sortie 12 est en liaison mécanique avec la caméra 2.

Dans ce cas, l'arbre de sortie 12 du moto réducteur 11 est solidaire de la caméra 2 par l'intermédiaire d'un bras monté rotatif sur la partie fixe 9 du support 8 pour constituer sa partie mobile 10 sur lequel est fixée ladite caméra 2.

Selon une variante de réalisation (non représentée), l'organe d'asservissement 11 est un moto réducteur relié à la partie mobile 10 du support 9 sur laquelle est fixée la caméra 2 par l'intermédiaire d'un câble flexible apte à transmettre les mouvements de commande par rotation sur lui-même.

Selon une autre variante de réalisation ne sortant pas du cadre de la présente invention (non représentée), la partie fixe du support de caméra 2 est constituée par une rotule sur laquelle est susceptible de s'articuler un siège correspondant, solidaire de la partie mobile dudit support sur laquelle est montée la caméra 2, ou inversement.

Dans ce même cas, les moyens d'asservissement assurant l'orientation de la caméra 2 en azimut ou en site sont constitués par deux câbles de traction diamétralement opposés sur la partie mobile d'un support de caméra 2 par rapport à l'axe longitudinal de la rotule se confondant avec celui de la perche 3 et reliés à des moyens de télécommande mécaniques.

Ou bien encore, les moyens d'asservissement assurant l'orientation de la caméra 2 en azimut et en site sont constitués par trois câbles de traction disposés radialement sur un support mobile de caméra 2 de façon à former entre eux des angles de 120° par rapport à l'axe longitudinal de la rotule sur laquelle il est susceptible de s'orienter par traction sur l'un ou l'autre des trois câbles à partir de leur extrémités opposées, en liaison avec des moyens de commande.

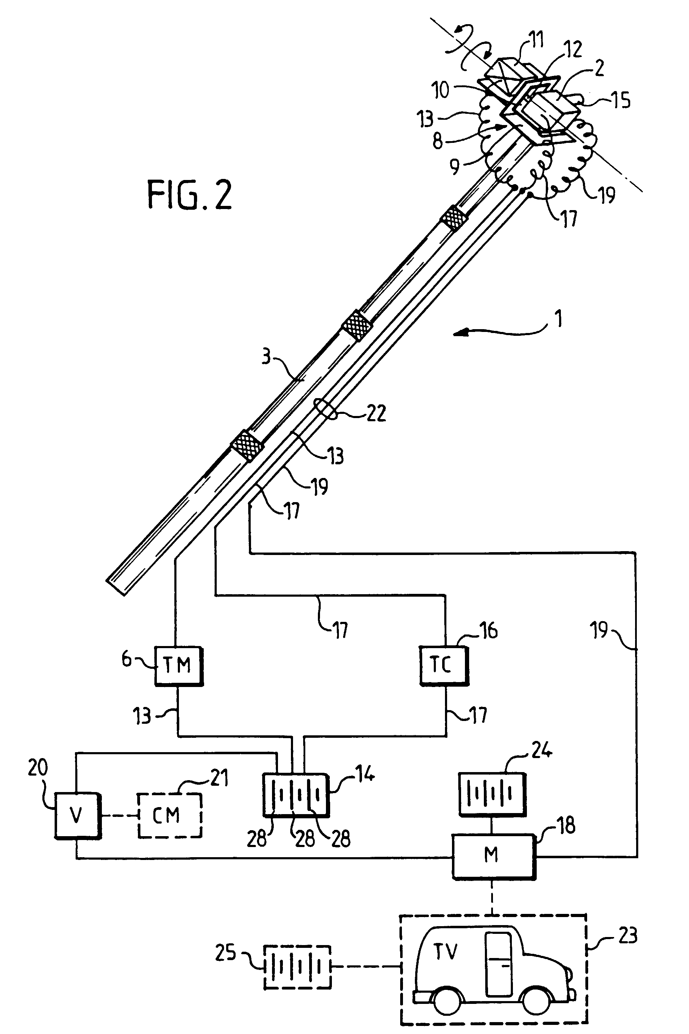

Selon l'exemple représenté sur les figures 1 et 2, les moyens de télécommande du moto réducteur 11 sont constitués par au moins un fil d'alimentation 13 disposé entre une source d'énergie électrique 14 et le dit moto réducteur 11 par l'intermédiaire d'un interrupteur 6 inverseur de polarité ou manette de commande de tous types mis à la portée de la main 5 de l'opérateur 4 à proximité de la base de la perche 3.

Selon une autre variante, non représentée, les moyens de télécommande du moto réducteur 11 sont constitués par un émetteur et un récepteur reliés entre eux par des signaux radio et dont l'alimentation s'effectue à partir d'une source d'énergie électrique.

Selon une autre caractéristique, l'équipement 1 selon l'invention comporte en outre des moyens de télécommande 16 de l'objectif 15 de la caméra 2 pour permettre le réglage de sa focale et/ou de la netteté.

Cette télécommande 16 est disposée électriquement entre la caméra 2 et la source d'énergie 14 par l'intermédiaire d'un fil électrique 17. Bien entendu, cette liaison peut aussi se faire par ondes radio.

L'équipement 1 comporte en outre un dispositif d'enregistrement vidéo ou magnétoscope 18 embarqué par l'opérateur 4 et en liaison d'une part avec la caméra 2 par un câble image composite en YC 19 fournissant un signal vidéo décrypté et d'autre part à la source d'énergie électrique 14.

Cette dernière liaison s'effectue par un viseur oculaire 20 ou moniteur d'oeilleton interposé dans le circuit vidéo entre le magnétoscope 18 et la source 14. Ce viseur 20 peut aussi être remplacé ou complété par un écran portatif 21 ou moniteur de contrôle identique à l'oeilleton 20.

Les câbles 13, 17, 19, issus du sommet de la perche 3, sont avantageusement réunis dans une gaine 22, laquelle est disposée le long de ladite perche 3. Il est à noter également que le magnétoscope 18 peut être aussi remplacé, dans le cas de transmission en direct, par une régie mobile 23.

Dans les deux cas, des alimentations qui leurs sont propres, respectivement 24 et 25, seront affectées au magnétoscope 18 ou à la régie mobile 23.

L'équipement 1 comporte, en outre, des moyens aptes à rendre auto-portable ses différents éléments constitutifs et qui sont constitués par un harnais 26 sanglant le buste de l'opérateur 4 et dont une partie inférieure forme un ceinturon 27 entourant sa taille, de manière à rendre l'opérateur entièrement autonome.

Le ceinturon 27 est conçu de telle sorte à pouvoir assurer la fixation d'une pluralité d'éléments de batterie 28 disposés sur sa périphérie et constituant la source d'énergie électrique 14.

Le harnais 26 comporte une parti dorsale 29 formant sac et dans laquelle est susceptible d'être embarqué le magnétoscope 18 et une partie pectorale 30 sur laquelle est disposé, selon des dispositions de confort préférentielles, tout ou partie des éléments constitutifs tels que : moniteur de contrôle vidéo 21; télécommande 16 de réglage de l'objectif 15 de la caméra 2; télécommande 6 de l'orientation angulaire de la caméra 2 ; les éléments non portés par le harnais 26 étant portés par la base de la perche 3.

Le ceinturon 27 comporte, en outre, dans sa partie avant, un prolongement inférieur 31 formant un support 31a dans lequel repose la base de la perche 3 pouvant être tenue ainsi par l'opérateur 4, d'une seule main 5, l'autre restant libre pour assurer les différentes opérations de commande de la caméra 2, le soutien de la perche étant éventuellement assisté par un câble disposé entre le harnais et la perche.

En fait, le soutien de la perche par rapport au harnais est assuré par un câble (non représenté) disposé entre une partie haute du harnais 26 et ladite perche 3 à proximité de son sommet pour former une triangulation avec le corps même de l'opérateur 4.

Selon une variante non représentée le harnais 26 comporte un dispositif latéral apte à supporter la perche 3 dont l'équilibre est assuré par un contrepoids 59 situé à sa base opposée à la caméra 2 et qui sera décrit plus loin.

Selon une autre caractéristique de l'invention, la perche 3 est repliable sur elle-même par effet télescopique et comporte à sa base un enrouleur 32 de câbles agissant automatiquement en enroulement sur celui-ci au fur et à mesure du reploiement de la perche 3, en fin de filmage.

Enfin, facultativement, l'équipement 1 comprend, en outre, un dispositif de prise de son, agissant simultanément à la prise de vues.

Dans ce cas, l'opérateur dispose d'un écouteur 33 disposé par exemple sur son casque 34.

Concernant le réglage de la caméra 2 en azimut, il est évident que ce mouvement peut être donné par une simple rotation de la perche 3 sur elle-même, appliquée par l'opérateur. Il n'en est pas de même pour le réglage en site avantageusement obtenu selon les moyens décrits ci-dessus et participant à l'invention. En effet, ce dernier réglage impliquerait nécessairement un débattement angulaire de la perche.

Légendes des symboles de la figure 2 :
TM : télécommande moteur (6)
TC : télécommande réglage caméra (16)
V : viseur oculaire (20)
CM : moniteur de contrôle (21)
M : magnétoscope (18)
TV : régie mobile (23)

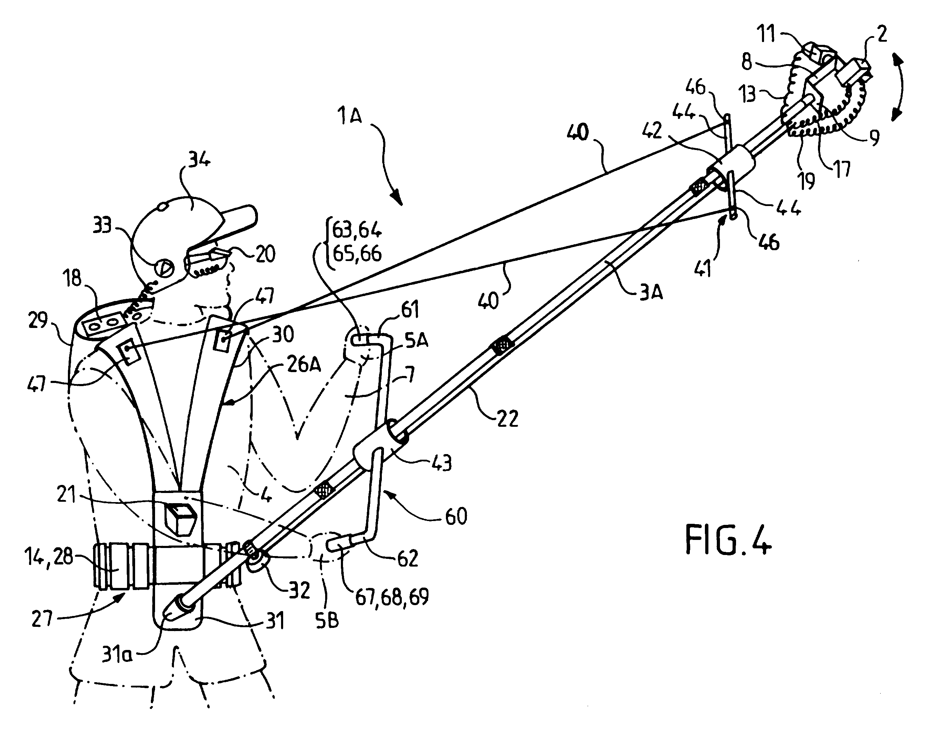

Selon une variante de réalisation représentée sur la figure 4, l'équipement de prise de vues 1A diffère essentiellement du précédent en ce que le câble de soutien de la perche 3A est doublé pour constituer deux sangles de maintien 40 arrimées par une de leurs extrémités à proximité du sommet de la perche 3A, alors que leurs autres extrémités sont rendues solidaires de deux points opposés 47 d'une partie haute du harnais 26A de manière telle que lesdites sangles 40 forment une seconde triangulation dont la base est constituée par la partie haute du harnais 26A, lesdites triangulations assurant l'équilibre et le maintien de la perche 3A, les deux mains de l'opérateur restant libres.

Les extrémités des sangles 40 sont fixées à proximité du sommet de la perche 3A par l'intermédiaire d'une potence 41.

La potence 41 est constituées par deux bras 44 reliés à un manchon 42 amovible comportant des moyens aptes à permettre sa fixation par serrage autour de la perche 3A à différents niveaux selon un choix prédéterminé.

Ces moyens sont constitués par un système d'attache rapide 42a permettant au manchon de se fixer autour de la perche 3A par un système de crantage 42b.

Sur les bras 44, une ouverture 45 est pratiquée de manière à attacher à plat les deux sangles 40 équipées de clips d'attaches rapides plats 46 afin d'éviter les torsions.

Les autres extrémités des deux sangles 40 sont issues de deux enrouleurs 47 à motorisation électrique fixés au harnais 27a au niveau des épaules de l'opérateur. La longueur des sangles 40 est variable (principe d'enroulement des ceintures de sécurité) et contrôlée par l'opérateur par l'intermédiaire d'un moyen de commande.

La motorisation centrale permet d'enrouler ou de dérouler les sangles 40 à une vitesse variable (lente à rapide).

Le moyen de commande 68 agit comme un potentiomètre positif ou négatif qui détermine le sens et la vitesse de rotation des moteurs.

Cet ensemble forme une triangulation qui permet d'assurer le maintien et l'équilibre de la perche 3A alors que l'opérateur reste les mains libres. La répartition des forces ainsi obtenue diminue l'effort à fournir pour maintenir la perche 3A en position.

L'opérateur peut ainsi faire relever la perche 3A vers une position verticale ou la faire baisser vers une position horizontale.

Par ces moyens, il peut faire évoluer le positionnement vertical de la caméra 2 du sol à la hauteur de la perche 3 avec le doigt actionnant la commande 68 et sans fatigue musculaire.

La potence 41 à attache rapide 42a pouvant se positionner à des niveaux différents de la perche 3A, l'opérateur peut affiner les réglages suivant la nature des mouvements désirés, de manière à travailler dans les conditions optimales en terme de précision, de confort et d'effort physique.

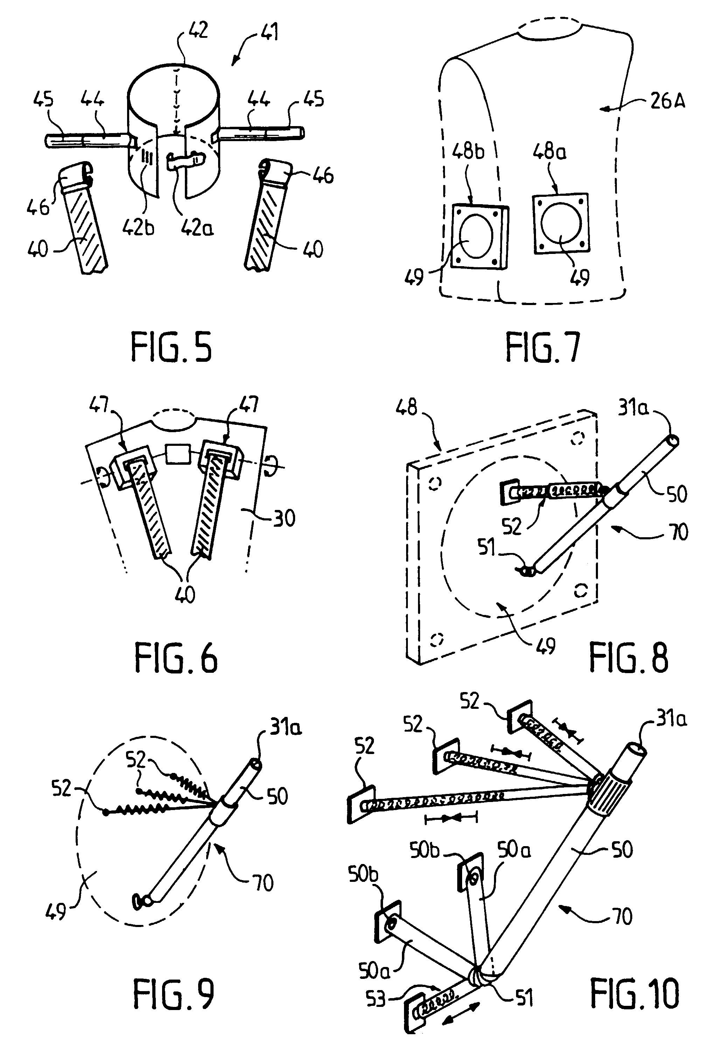

Par ailleurs (figures 7 à 10), le support 31a sur lequel repose la base de la perche (3, 3A) est équipé d'un système d'amortissement 70 disposé sur une plaque de fixation 48 intégrée dans une partie inférieure du harnais (26, 26A) et sur laquelle est disposé au moins un axe 50 par l'intermédiaire d'une articulation 51, l'extrémité libre dudit axe 50 constituant le support 31a de la perche (3, 3A), au moins un ressort 52 étant interposé entre une partie supérieure de l'axe 50 et ladite plaque 48.

Plus précisément, la plaque de fixation 48 intégrée au harnais 30 dispose de deux réglages de positionnement :
a) Position faciale 48a : bas-ventre de l'opérateur.
   Utilisation standard (plongée haute-moyenne-basse avec panoramique)
b) Position latérale 48b : hanche de l'opérateur.

Utilisation pour mouvements verticaux de forte amplitude où la caméra 2 peut être positionnée au raz du sol.

La plaque 48 comporte une plaque circulaire interne 49 sur laquelle vient se fixer le système d'amortissement.

L'articulation 51 est une rotule ou un double anneau autorisant des mouvements de la perche dans toutes les directions.

Le ressort 52 est à action mécanique ou hydraulique et réglable en longueur et en force, et relie la plaque 49 et l'axe 50 qui, dès lors, est maintenu en position haute selon un angle de 30 à 60°.

L'exemple selon la figure 9 montre une variante où les ressorts 52 sont au nombre de trois pour une meilleure stabilité et une meilleure précision.

L'exemple selon la figure 10 montre une autre variante, encore plus élaborée, dans laquelle l'axe 50 se divise à sa base, à partir de la rotule 51 par deux axes secondaires 50a, 50b, et un organe supplémentaire d'amortissement 53 travaillant en poussée entre le harnais 26A ou le corps de l'opérateur et la perche 3A, alors que les ressorts 52 travaillent en traction.

Egalement, la perche (3, 3A) est assujettie au support 31a par l'intermédiaire d'un organe support 90 comportant à sa partie inférieure au moins un contrepoids 59 apte à assurer l'équilibre de la perche (3, 3A) par compensation de son poids en porte à faux.

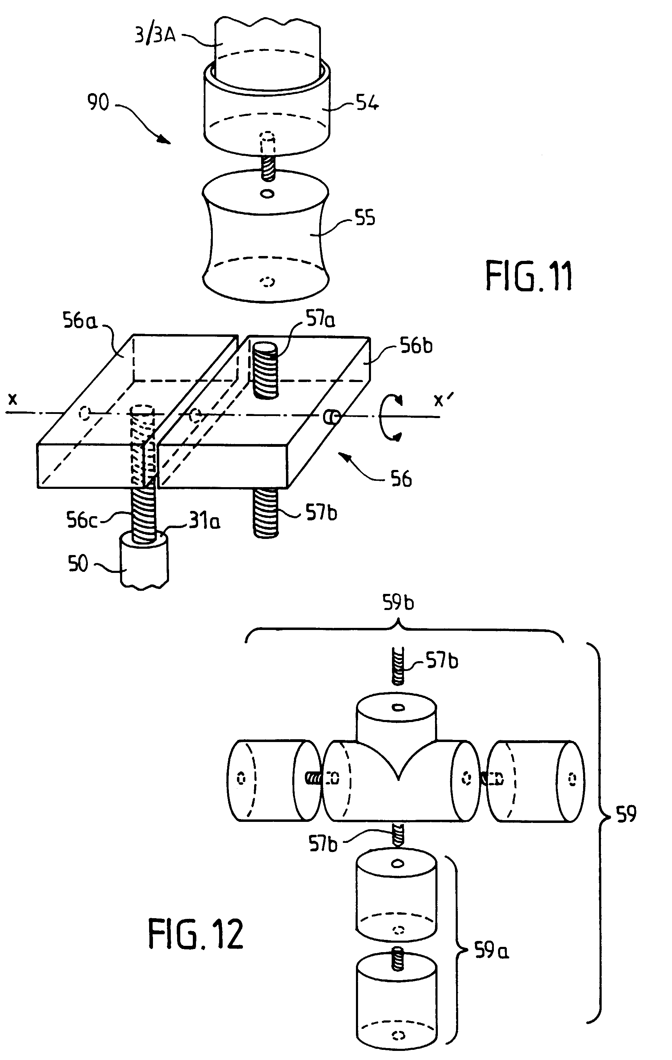

Ce support de perche à contrepoids 90 (voir figure 11) comporte :
- un support fixe 54 type porte-drapeau, dans lequel vient s'emboîter la base de la perche 3A;
- un support intermédiaire 55 souple en plastique haute-densité (type pieds de mats de planche à voile),
- une pièce de fixation 56 constituée de deux parties mobiles autour d'un axe horizontal XX'.

La première partie 56a se fixe dans le support 31a au bout l'axe 50 du système d'amortissement 70 par l'intermédiaire de la vis 56c.

La deuxième partie 56b dispose d'une vis supérieure 57a qui sert à recevoir les deux premiers éléments 55, 54 et d'une vis inférieure 57b qui sert à recevoir des contrepoids 59 (voir figure 12).

Une fois la partie 1 (56a) fixée, la partie 2 (56b) reste mobile en rotation autour de l'axe horizontal XX'. Les contrepoids 59 sont des mini barres pouvant se visser les unes à la suite des autres. La première peut être droite 59a pour l'utilisation latérale ou coudée en T 59b pour l'utilisation faciale.

Selon une autre caractéristique de l'invention, un guidon de commande 60 est disposé transversalement sur la perche 3A à portée de mains de l'opérateur 4 et comporte deux poignées 61 et 62 sur lesquelles sont disposés des moyens de commandes électriques actionnables par l'opérateur tout en permettant à celui-ci de faire entièrement corps avec ledit équipement.

Plus précisément, les poignées 61, 62 comportent d'une part des éléments de réglage 63 et 64 respectivement du diaphragme et de la netteté de l'objectif 15 de la caméra 2, et d'autre part un élément de commande 67 du zoom, et un élément de commande 69 assurant le réglage en azimut et/ou en site de la caméra 2.

En outre, la poignée droite 62 comporte le moyen de commande 68 des enrouleurs 47 des sangles de maintien 40.

Le moyen de commande 69 précité est un "joystick" comportant un organe de préhension constitué par une partie verticale rigide 69a dont l'extrémité est coudée à 90° et se termine par un anneau 69b destiné au pouce de l'opérateur lui permettant selon des mouvements avant-arrière ou droite-gauche exercé sur le "joystick" 69 de générer tous les mouvements de la caméra 2.

En fait, le "joystick" 69 est un inverseur de polarité double permettant la variation de la position de la caméra dans un sens ou dans l'autre tant en site qu'en azimut.

En outre, la poignée gauche comporte à son sommet un interrupteur-bouton 65a ou disposé latéralement 65b destiné au déclenchement du magnétoscope 18, et un autre interrupteur à deux positions 66 plaqué sur le flan interne de ladite poignée, destiné à la commande d'un système de motorisation (non représenté) de la perche 3A apte à la rendre téléscopique à la manière des antennes électriques pour véhicules automobiles.

Le guidon 60 qui vient d'être décrit est solidarisé de la perche 3A par l'intermédiaire d'un manchon amovible 43 apte à permettre sa fixation par serrage à différents niveaux de ladite perche 3A selon un choix prédétermié.

Le manchon 43 est muni d'une fixation à attache rapide 43a sur la perche 3A comportant également un système de crantage 43b favorisant son immobilisation en rotation.

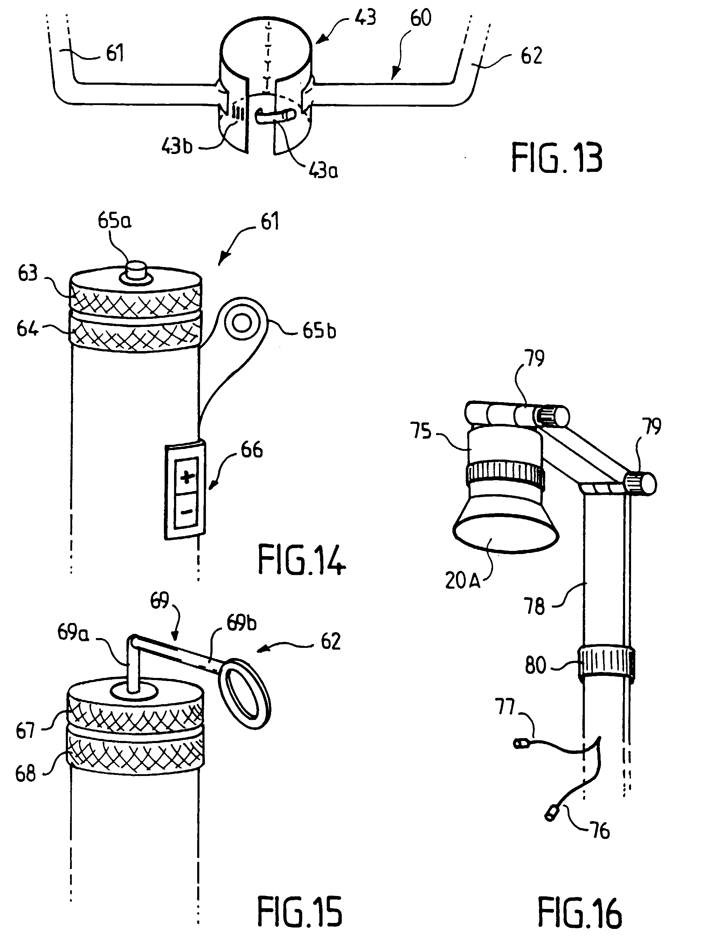

Selon une autre caractéristique de l'invention (figure 16), le viseur oculaire 20a est articulé sur une potence 78 articulée et réglable par rapport à un support fixe adapté à la tête de l'opérateur 4.

Un tel support pourra être par exemple une casquette.

La casquette oeilleton-moniteur répond aux caractéristiques suivantes :
- une visée vidéo déportée comportant un viseur tube Beta professionnel 75, un câble vidéo standard (BNC) 76 pouvant se connecter sur la caméra 2 ou sur le magnéto 18, une alimentation autonome 77 (câble relié à une batterie portable 14 : batterie ceinture, de poche...);
- un support d'oeilleton comportant une potence articulée réglable 78 permettant de régler ou de débrayer la position de l'oeilleton au moyen de charnières 79 et disposant de vis de réglage 80 pour s'adapter au visage de l'opérateur, fixée sur un support adapté à la tête de l'opérateur (casquette, anneau serre-tête...).

La casquette oeilleton-moniteur constitue donc un système de visée vidéo autonome pouvant se connecter sur l'ensemble des moyens techniques audiovisuels.

Selon les variantes de réalisation, la rotule fixée en bout de perche est amovible et peut être positionnée sur un bras de déport, sur une ventouse, sur un pieds.
Les conditions d'utilisation en terme de contrôle de l'image et des mouvements de caméra sont conservées à l'identique.

Le harnais 26 ou 26A est constitué par une coque semi-rigide selon un principe similaire à celui du "Steady Cam".

Chacun des éléments y est fixé à une place déterminée selon un moyen de rivets amovibles (vis + papillons).

## Revendications

1. Equipement de prise de vues par une caméra pour leur enregistrement cinématographique et/ou vidéo, laquelle est disposée à l'extrémité d'une perche apte à être tenue par un opérateur (4), à la portée duquel sont mis des moyens de télécommande de ladite caméra (2) pour permettre son réglage, à une distance au moins supérieure à la longueur de l'un de ses bras (7), selon l'un au moins de ses axes d'orientation en azimut et/ou en site en cours de filmage, caractérisé en ce qu'il comprend des moyens aptes à rendre auto-portables ses différents éléments constitutifs selon une position relativement stable de la perche (3, 3A) par rapport au corps de l'opérateur (4) tout en laissant à celui-ci toute liberté de déplacement, lesquels moyens sont constitués par un harnais (26, 26A) sanglant le buste de l'opérateur (4) et sur la partie inférieure antérieure (31) duquel est ménagé un support (31a), sur lequel repose la base de la perche (3, 3A) de manière telle que la tenue de celle-ci par rapport au harnais (26, 26A) puisse être assurée par au plus une main de l'opérateur, l'autre au moins restant libre pour assurer les différentes opérations de commande à distance de la caméra (2).

2. Equipement selon la revendication 1 caractérisé en ce que le soutien de la perche par rapport au harnais (26) est assuré par un câble (non représenté) disposé entre une partie haute du harnais (26) et ladite perche (3) à proximité de son sommet pour former une triangulation avec le corps même de l'opérateur (4).

3. Equipement selon la revendication 2 caractérisé en ce que le câble de soutien de la perche (3A) est doublé pour constituer deux sangles de maintien (40) arrimées par une de leurs extrémités à proximité du sommet de la perche (3A), alors que leurs autres extrémités sont rendues solidaires de deux points opposés (47) d'une partie haute du harnais (26A) de manière telle que lesdites sangles (40) forment une seconde triangulation dont la base est constituée par la partie haute du harnais (26A), lesdites triangulations assurant l'équilibre et le maintien de la perche (3A), les deux mains de l'opérateur restant libres.

4. Equipement selon la revendication 3 caractérisé en ce que les extrémités des sangles (40) sont fixées à proximité du sommet de la perche (3A) par l'intermédiaire d'une potence (41).

5. Equipement selon la revendication 4 caractérisé en ce que la potence (41) est constituées par deux bras (44) reliés à un manchon (42) amovible comportant des moyens aptes à permettre sa fixation par serrage autour de la perche (3A) à différents niveaux selon un choix prédéterminé.

6. Equipement selon la revendication 3 caractérisé en ce qui les extrémités des sangles (40) sont rendues solidaires de deux points opposés (47) de la partie haute du harnais (26A) par l'intermédiaire d'enrouleurs susceptibles d'être motorisés et disposés au niveau des épaules de l'opérateur (4).

7. Equipement selon l'une des revendications précédentes caractérisé en ce que le support (31a) sur lequel repose la base de la perche (3, 3A) est équipé d'un système d'amortissement (70) disposé sur une plaque de fixation (48) intégrée dans une partie inférieure du harnais (26, 26A) et sur laquelle est disposé au moins un axe (50) par l'intermédiaire d'une articulation (51), l'extrémité libre dudit axe (50) constituant le support (31a) de la perche (3, 3A), au moins un ressort (52) étant interposé entre une partie supérieure de l'axe (50) et ladite plaque (48).

8. Equipement selon la revendication 7 caractérisé en ce que la perche (3, 3A) est assujettie au support (31a) par l'intermédiaire d'un organe support (90) comportant à sa partie inférieure au moins un contrepoids (59) apte à assurer l'équilibre de la perche (3, 3A) par compensation de son poids en porte à faux.

9. Equipement selon l'une quelconque des revendications précédentes caractérisé en ce qu'un guidon de commande (60) est disposé transversalement sur la perche (3A) à portée de mains de l'opérateur (4) et comporte deux poignées (61 et 62) sur lesquelles sont disposés des moyens de commandes électriques actionnables par l'opérateur tout en permettant à celui-ci de faire entièrement corps avec ledit équipement.

10. Equipement selon la revendication 9 caractérisé en ce que les poignées (61, 62) comportent d'une part des éléments de réglage (63 et 64) respectivement du diaphragme et de la netteté de l'objectif (15) de la caméra (2), et d'autre part un élément de commande (67) du zoom, et un élément de commande (69) assurant le réglage en azimut et/ou en site de la caméra (2).

11. Equipement selon la revendication 10 caractérisé en ce que les poignées (61, 62) du guidon (60) comportent en outre un élément de commande (68) des enrouleurs (47) des sangles (40) et un élément de commande (65a ou 65b) destiné au déclenchement d'un magnétoscope embarqué (18).

12. Equipement selon l'une des revendications 9 à 11 caractérisé en ce que le guidon (60) est solidarisé de la perche (3A) par l'intermédiaire d'un manchon amovible (43) apte à permettre sa fixation par serrage à différents niveaux de ladite perche (3A) selon un choix prédétermié.

13. Equipement selon l'une quelconque des revendications précédentes caractérisé en ce que la perche (3, 3A) est repliable sur elle-même par effet télescopique et comporte à sa base un enrouleur (32) de câbles agissant automatiquement en enroulement sur celui-ci au fur et à mesure du reploiement de la perche (3, 3A), en fin de filmage.

14. Equipement selon l'une quelconque des revendications précédentes caractérisé en ce que la caméra (2) est disposée à l'extrémité de la perche (3, 3A) par l'intermédiaire d'un support (8) dont une partie fixe (9) est solidaire de ladite extrémité alors qu'une partie mobile (10), apte à pivoter en azimut et/ou en site par rapport à la partie fixe (9), porte la caméra (2) et assure son orientation par l'intermédiaire d'un organe d'asservissement (11) assujetti par des moyens de télécommande (6,69) se trouvant à disposition de l'opérateur (4).

15. Equipement selon la revendication 14 caractérisé en ce que l'organe d'asservissement (11) est un moto réducteur électrique solidaire de la partie fixe (9) du support (8) et dont l'arbre rotatif de sortie (12) est en liaison mécanique avec la caméra (2).

16. Equipement selon la revendication 15 caractérisé en ce que l'arbre de sortie (12) du moto réducteur (11) est solidaire de la caméra (2) par l'intermédiaire d'un bras monté rotatif sur la partie fixe (9) du support (8) pour constituer sa partie mobile (10) sur lequel est fixée ladite caméra (2).

17. Equipement selon la revendication 14 caractérisé en ce que l'organe d'asservissement (11) est un moto réducteur relié à la partie mobile (10) du support (9) sur laquelle est fixée la caméra (2) par l'intermédiaire d'un câble flexible apte à transmettre les mouvements de commande par rotation sur lui-même.

18. Equipement selon la revendication 14 caractérisé en ce que la partie fixe du support de caméra (2) est constituée par une rotule sur laquelle est susceptible de s'articuler un siège correspondant, solidaire de la partie mobile dudit support sur laquelle est montée la caméra (2), ou inversement.

19. Equipement selon la revendication 18 caractérisé en ce que les moyens d'asservissement assurant l'orientation de la caméra (2) en azimut et/ou en site sont constitués par au moins un câble de traction disposé sur la partie mobile d'un support de caméra (2) par rapport à l'axe longitudinal de la rotule se confondant avec celui de la perche (3) et reliés à des moyens de télécommande mécaniques.

20. Equipement selon l'une quelconque des revendications 14 à 17 caractérisé en ce que les moyens de télécommande du moto réducteur (11) sont constitués par au moins un fil d'alimentation (13) disposé entre une source d'énergie électrique (14) et le dit moto réducteur (11) par l'intermédiaire d'un interrupteur (6, 69) inverseur de polarité ou manette de commande mis à la portée de la main (5) de l'opérateur (4).

21. Equipement selon l'une quelconque des revendications 14 à 17 caractérisé en ce que les moyens de télécommande du moto réducteur (11) sont constitués par un émetteur et un récepteur reliés entre eux par des signaux radio et dont l'alimentation s'effectue à partir d'une source d'énergie électrique.

22. Equipement selon l'une quelconque des revendications précédentes caractérisé en ce qu'il comporte en outre un dispositif d'enregistrement vidéo ou magnétoscope (18) embarqué par l'opérateur (4) et en liaison d'une part avec la caméra (2) par un câble image composite en YC (19) fournissant un signal vidéo décrypté et d'autre part à la source d'énergie électrique (14).

23. Equipement selon la revendication 22 caractérisé en ce qu'un viseur oculaire (20, 20a) ou moniteur d'oeilleton est interposé dans le circuit vidéo et mis à disposition de l'opérateur (4).

24. Equipement selon la revendication 22 caractérisé en ce qu'un moniteur de contrôle par écran portatif (21) est interposé dans le circuit vidéo et mis à disposition de l'opérateur (4).

25. Equipement selon l'une quelconque des revendications précédentes caractérisé en ce qu'une partie inférieure du harnais (26, 26A) forme un ceinturon (27) entourant la taille de l'opérateur (4).

26. Equipement selon la revendication 25 caractérisé en ce que le ceinturon (27) est conçu de telle sorte à pouvoir assurer la fixation d'une pluralité d'éléments de batterie (28) disposés sur sa périphérie et constituant la source d'énergie électrique (14).

27. Equipement selon l'une des revendications prédentes caractérisé en ce que le harnais (26, 26A) comporte une partie dorsale (29) formant sac et dans laquelle est susceptible d'être embarqué le magnétoscope (18) et une partie pectorale (30) sur laquelle est disposé, selon des dispositions de confort préférentielles, tout ou partie des éléments constitutifs tels que : moniteur de contrôle vidéo (21) ; télécommande (16) de réglage de l'objectif (15) de la caméra (2); télécommande (6) de l'orientation angulaire de la caméra (2) ; les éléments non portés par le harnais (26, 26A) étant portés par la perche (3, 3A) ou le guidon (60).

28. Equipement selon l'une quelconque des revendications précédentes caractérisé en ce qu'il comprend, en outre, un dispositif de prise de son, agissant simultanément à la prise de vues.

29. Equipement selon la revendication 21 caractérisé en ce que le viseur oculaire (20a) est articulé sur une potence (78) articulée et réglable par rapport à un support fixe adapté à la tête de l'opérateur (4).

## Patentansprüche

1. Vorrichtung zur Aufnahme von Bildern durch eine Kamera für deren kinematographische und/oder Videoaufzeichnung, wobei diese an dem Ende einer Stange angeordnet ist, die geeignet ist, durch einen Bediener (4) gehalten zu werden, in dessen Reichweite Fernbedienungseinrichtungen der Kamera (2) angeordnet sind, um ihre Einstellung in einer Entfernung von zumindest größer als die Länge eines seiner Arme (7) gemäß zumindest einer ihrer Orientierungsachsen azimutal und/oder höhenmäßig während des Filmens zu erlauben,
**dadurch gekennzeichnet**, daß
sie Einrichtungen aufweist, die geeignet sind, ihre verschiedenen Bestandteile selbsttragend zu machen gemäß einer verhältnismäßig stabilen Position der Stange (3, 3A) im Verhältnis zu dem Körper des Bedieners (4), wobei diesem jegliche Fortbewegungsfreiheit gelassen wird, wobei die Einrichtungen aus einem Geschirr (26, 26A) gebildet werden, das die Brust des Bedieners (4) umgürtet und auf dessen unterem vorderen Abschnitt (31) eine Halterung (31a) angeordnet ist, auf welcher die Basis der Stange (3, 3A) aufliegt, derart, daß deren Haltung im Verhältnis zu dem Geschirr (26, 26A) durch höchstens eine Hand des Bedieners gewährleistet sein kann, wobei die andere zumindest freibleibt, um die verschiedenen Fernbedienungsoperationen der Kamera (2) zu gewährleisten.

2. Vorrichtung gemäß Anspruch 1, dadurch gekennzeichnet, daß die Halterung der Stange im Verhältnis zu dem Geschirr (26) durch ein (nicht dargestelltes) Kabel gewährleistet ist, welches zwischen einem oberen Abschnitt des Geschirrs (26) und der Stange (3) in der Nähe ihrer Spitze angeordnet ist, um eine Triangulation mit dem Körper selbst des Bedieners (4) zu bilden.

3. Vorrichtung gemäß Anspruch 2, dadurch gekennzeichnet, daß das Haltekabel der Stange (3A) verdoppelt ist, um zwei Halterungsgurte (40) zu bilden, welche mit einem seiner Enden in der Nähe der Spitze der Stange (3A) befestigt sind, während seine anderen Enden an zwei gegenüberliegenden Punkten (47) eines oberen Abschnitts des Geschirrs (26A) befestigt sind, derart, daß die Gurte (40) eine zweite Triangulation bilden, deren Basis durch den oberen Abschnitt des Geschirrs (26A) gebildet wird, wobei die Triangulationen das Gleichgewicht und das Halten der Stange (3A) gewährleisten, wobei die beiden Hände des Bedieners frei bleiben.

4. Vorrichtung gemäß Anspruch 3, dadurch gekennzeichnet, daß die Enden der Gurte (40) in der Nähe der Spitze der Stange (3A) durch Zwischenschaltung eines Trägers (41) befestigt sind.

5. Vorrichtung gemäß Anspruch 4, dadurch gekennzeichnet, daß der Träger (41) aus zwei Armen (44) gebildet wird, welche mit einer lösbaren Manschette (42) verbunden sind, die Einrichtungen aufweist, die geeeignet sind, ihre Befestigung durch Festziehen um die Stange (3A) auf verschiedenen Höhen gemäß einer vorbestimmten Wahl zu erlauben.

6. Vorrichtung gemäß Anspruch 3, dadurch gekennzeichnet, daß die Enden der Gurte (40) an zwei gegenüberliegenden Punkten (47) des oberen Abschnitts des Geschirrs (26A) durch Wickler befestigt sind, die motorisiert sein können und in Höhe der Schultern des Bedieners (4) angeordnet sind.

7. Vorrichtung gemäß einem der vorangehenden Ansprüche, dadurch gekennzeichnet, daß die Halterung (31a), auf der die Basis der Stange (3, 3A) aufliegt, mit einem Dämpfungssystem (70) versehen ist, welches auf einer Befestigungsplatte (48) angeordnet ist, die in einem inneren Abschnitt des Geschirrs (26, 26A) integriert ist und auf der zumindest eine Achse (50) mittels eines Gelenkes (51) angeordnet ist, wobei das freie Ende der Achse (50) die Halterung (31a) der Stange (3, 3A) bildet, wobei zumindest eine Federung (52) zwischen einen oberen Abschnitt der Achse (50) und der Platte (48) eingefügt ist.

8. Vorrichtung gemäß Anspruch 7, dadurch gekennzeichnet, daß die Stange (3, 3A) an der Stütze (31a) mittels eines Stützorgans (90) gehaltert ist, welches an seinem unteren Abschnitt zumindest ein Gegengewicht (59) aufweist, welches geeignet ist, das Gleichgewicht der Stange (3, 3A) durch Kompensation seines Gewichts in Schräglage zu gewährleisten.

9. Vorrichtung gemäß einem der vorangehenden Ansprüche, dadurch gekennzeichnet, daß der Steuerungslenker (60) quer auf der Stange (3A) angeordnet ist, in Reichweite der Hände des Bedieners (4) und zwei Griffe (61 und 62) aufweist, auf denen elektrische Steuerungseinrichtungen angeordnet sind, die durch den Bediener bedient werden können, wobei diesem ermöglicht ist, mit der Konstruktion ganz eine Einheit zu bilden.

10. Vorrichtung gemäß Anspruch 9, dadurch gekennzeichnet, daß die Griffe (61, 62) einerseits Einstellelemente (63 und 64) jeweils der Blende und der Schärfe des Objektivs (15) der Kamera (2) und andererseits ein Steuerelement (67) der Brennweite und ein Steuerelement (69) aufweisen, welches die Einstellung azimutal und/oder höhenmäßig der Kamera (2) gewährleistet.

11. Vorrichtung gemäß Anspruch 10, dadurch gekennzeichnet, daß die Griffe (61, 62) des Lenkers (60) unter anderem ein Steuerelement (68) der Wickler (47) der Gurte (40) und ein Steuerelement (65a oder 65b), das für die Auslösung eines mitgeführten Videorekorders (18) bestimmt ist, aufweisen.

12. Vorrichtung gemäß einem der Ansprüche 9 bis 11, dadurch gekennzeichnet, daß der Lenker (60) mit der Stange (3A) mittels einer lösbaren Manschette (43) befestigt ist, welche geeignet ist, ihre Befestigung durch Festziehen auf verschiedenen Höhen der Stange (3A) gemäß einer vorbestimmten Wahl zu ermöglichen.

13. Vorrichtung gemäß einem der vorangehenden Ansprüche, dadurch gekennzeichnet, daß die Stange (3, 3A) teleskopisch in sich selbst einziehbar ist und an ihrer Basis einen Kabelwickler (32) aufweist, der automatisch durch Aufwicklung auf diesen gemäß dem Einziehen der Stange (3, 3A), am Ende des Filmens, wirkt.

14. Vorrichtung gemäß einem der vorangehenden Ansprüche, dadurch gekennzeichnet, daß die Kamera (2) an dem Ende der Stange (3, 3A) mittels einer Halterung (8) angeordnet ist, deren einer fester Abschnitt (9) mit dem Ende verbunden ist, während ein beweglicher Abschnitt (10), der geeignet ist, azimutal und/oder höhenmäßig im Verhältnis zu dem festen Abschnitt (9) zu drehen, die Kamera (2) trägt und ihre Orientierung mittels eines Stellorgans (11) gewährleistet, welches durch Fernbedienungseinrichtungen (6, 69), die sich zur Verfügung des Bedieners (4) befinden, betätigt wird.

15. Vorrichtung gemäß Anspruch 14, dadurch gekennzeichnet, daß das Stellorgan (11) ein elektrischer Getriebemotor ist, der mit dem festen Abschnitt (9) der Halterung (8) verbunden ist und dessen Ausgangsrotationsachse (12) in mechanischer Verbindung mit der Kamera (2) ist.

16. Vorrichtung gemäß Anspruch 15, dadurch gekennzeichnet, daß die Ausgangsrotationsachse (12) des Getriebemotors (11) mit der Kamera (2) mittels eines Armes befestigt ist, der drehbar auf dem festen Abschnitt (9) der Halterung (8) montiert ist, um ihren beweglichen Abschnitt (10) zu bilden, auf welcher die Kamera (2) befestigt ist.

17. Vorrichtung gemäß Anspruch 14, dadurch gekennzeichnet, daß das Stellorgan (11) ein Getriebemotor ist, welcher mit dem beweglichen Abschnitt (10) der Halterung (9) verbunden ist, auf welchem die Kamera (2) mittels eines flexiblen Kabels befestigt ist, welches geeignet ist, die Steuerungsbewegungen durch Drehung um sich selbst zu übertragen.

18. Vorrichtung gemäß Anspruch 14, dadurch gekennzeichnet, daß der feste Abschnitt der Halterung der Kamera (2) durch ein Kugelgelenk gebildet ist. auf welchem ein entsprechender Sitz angelenkt ist, der mit dem beweglichen Abschnitt der Halterung befestigt ist, auf welchem die Kamera (2) montiert ist oder umgekehrt.

19. Vorrichtung gemäß Anspruch 18, dadurch gekennzeichnet, daß die Einstelleinrichtungen, welche die Orientierung der Kamera (2) azimutal und/oder höhenmäßig gewährleisten, durch zumindest ein Zugkabel gebildet werden, welches auf dem beweglichen Abschnitt einer Halterung der Kamera (2) angeordnet ist, im Verhältnis zu der Längsachse des Kugelgelenks, welche in diejenige der Stange (3) übergeht, und welche mit mechanischen Fernbedienungseinrichtungen verbunden sind.

20. Vorrichtung gemäß einem der Ansprüche 14 bis 17, dadurch gekennzeichnet, daß die Fernbedienungseinrichtungen des Getriebemotors (11) durch zumindest ein Versorgungskabel (13) gebildet werden, welches zwischen einer elektrischen Energiequelle (14) und dem Getriebemotor (11) mittels eines Unterbrechers (6, 69), Polaritätswechslers oder Steuerungsgriff, in Reichweite der Hand (5) des Bedieners (4) gesetzt, angeordnet ist.

21. Vorrichtung gemäß einem der Ansprüche 14 bis 17, dadurch gekennzeichnet, daß die Fernbedienungseinrichtungen des Getriebemotors (11) durch einen Sender und einen Empfänger gebildet werden, die miteinander durch Funksignale verbunden sind und deren Speisung durch eine elektrische Energiequelle erfolgt.

22. Vorrichtung gemäß einem der vorangehenden Ansprüche, dadurch gekennzeichnet, daß sie unter anderem eine Videoaufzeichnungs- oder Videorekorder-Vorrichtung (18) aufweist, welche durch den Bediener (4) miteführt wird, und einerseits mit der Kamera (2) durch ein YC-Verbundbildkabel (19), welches ein entschlüsseltes Videosignal liefert, und andererseits mit der elektrischen Energiequelle (14) verbunden ist.

23. Vorrichtung gemäß Anspruch 22, dadurch gekennzeichnet, daß ein Okularsucher (20, 20a) oder Suchermonitor zwischen die Videoschaltung eingefügt ist und dem Bediener (4) zur Verfügung gestellt ist.

24. Vorrichtung gemäß Anspruch 22, dadurch gekennzeichnet, daß ein Kontrollmonitor mit tragbarem Bildschirm (21) in die Videoschaltung zwischengeschaltet ist und zur Verfügung des Bedieners (4) gestellt ist.

25. Vorrichtung gemäß einem der vorangehenden Ansprüche, dadurch gekennzeichnet, daß ein unterer Abschnitt des Geschirrs (26, 26A) einen Leibriemen (27) bildet, der die Taille des Bedieners (4) umgibt.

26. Vorrichtung gemäß Anspruch 25, dadurch gekennzeichnet, daß der Leibriemen (27) derart ausgebildet ist, daß er die Befestigung einer Mehrzahl von Batterieelementen (28) ermöglicht, welche auf seinem Umfang angeordnet sind und die elektrische Energiequelle (14) bilden.

27. Vorrichtung gemäß einem der vorangehenden Ansprüche, dadurch gekennzeichnet, daß das Geschirr (26, 26A) einen Rückenabschnitt (29) aufweist, welcher eine Tasche bildet und in welchem der Videorekorder (18) mitgeführt werden kann, und einen Brustabschnitt (30), auf welchem gemäß bevorzugten Komfortmaßnahmen alle oder ein Teil der Bestandteile angeordnet sind, wie z.B.: Videokontrollmonitor (21); Fernbedienung (16) zur Einstellung des Objektivs (15) der Kamera (2); Fernbedienung (6) der Winkelorientierung der Kamera (2); wobei die nicht von dem Geschirr (26, 26A) getragenen Elemente durch die Stange (3, 3A) oder den Lenker (60) getragen werden.

28. Vorrichtung gemäß einem der vorangehenden Ansprüche, dadurch gekennzeichnet, daß sie unter anderem eine Tonaufnahmevorrichtung aufweist, welche gleichzeitig mit der Bildaufnahme funktioniert.

29. Vorrichtung gemäß Anspruch 21, dadurch gekennzeichnet, daß der Okularsucher (20a) auf einen Träger (78) angelenkt ist, der angelenkt und einstellbar im Verhältnis zu einer festen Halterung ist, die an den Kopf des Bedieners (4) angepaßt ist. und einstellbar im Verhältnis zu einer festen Halterung ist, die an den Kopf des Bedieners (4) angepaßt ist.

## Claims

1. Equipment for taking pictures with a camera for their cinematographic and/or video recording, which is disposed at the end of a pole suitable for being held by an operator (4), within reach of whom are placed means for the remote control of the said camera (2) to enable it to be adjusted, at a distance at least greater than the length of one of his arms (7), along at least one of its axes of orientation in azimuth and/or elevation during filming, characterised in that it comprises means for making its different constituent parts self-supporting in a relative stable position of the pole (3, 3A) with respect to the body of the operator (4) while leaving the latter complete freedom of movement, which means consist of a harness (26, 26a) strapped around the chest of the operator (4) and on the front lower part (31) of which is provided a support (31a), on which the base of the pole (3, 3A) rests so that the latter can be held with respect to the harness (26, 26a) by at most one hand of the operator, the other one at least remaining free in order to provide the different operations of remote control of the camera (2).

2. Equipment according to Claim 1, characterised in that the pole is supported with respect to the harness (26) by a cable (not shown) disposed between an upper part of the harness (26) and the said pole (3) in proximity to its top in order to form a triangulation with the body itself of the operator (4).

3. Equipment according to Claim 2, characterised in that the cable supporting the pole (3A) is duplicated in order to constitute two holding straps (40) anchored at one of their ends in the vicinity of the top of the pole (3A), whilst their other ends are secured to two opposite points (47) on an upper part of the harness (26a) so that the said straps (40) form a second triangulation, the base of which is formed by the upper part of the harness (26a), the said triangulations ensuring the equilibrium and holding of the pole (3A), the two hands of the operator remaining free.

4. Equipment according to Claim 3, characterised in that the ends of the straps (40) are fixed in the vicinity of the top of the pole (3A) by means of a bracket (41).

5. Equipment according to Claim 4, characterised in that the bracket (41) is formed by two arms (44) connected to a removable sleeve (42) having means suitable for enabling it to be fixed by clamping around the pole (3A) at different levels according to a predetermined choice.

6. Equipment according to Claim 3, characterised in that the ends of the straps (40) are fixed to two opposite points (47) on the upper part of the harness (26a) by means of reels able to be motorised and disposed at the level of the shoulders of the operator (4).

7. Equipment according to one of the preceding claims, characterised in that the support (31a) on which the base of the pole (3, 3A) rests is equipped with a damping system (70) disposed on a fixing plate (48) integrated into a lower part of the harness (26, 26a) and on which is disposed at least one shaft (50) by means of an articulation (51), the free end of the said shaft (50) constituting the support (31a) for the pole (3, 3A), at least one spring (52) being interposed between an upper part of the shaft (50) and the said plate (48).

8. Equipment according to Claim 7, characterised in that the pole (3, 3A) is fixed to the support (31a) by means of a support member (90) having at its lower part at least one counterweight (59) suitable for ensuring the equilibrium of the pole (3, 3A) by compensating for its weight in cantilever.

9. Equipment according to one of the preceding claims, characterised in that a control handlebar (60) is disposed transversely on the pole (3A) within reach of the hands of the operator (4) and has two handles (61 and 62) on which are disposed electrical control means which can be actuated by the operator whilst enabling him to form a single unit with the said equipment.

10. Equipment according to Claim 9, characterised in that the handles (61, 62) have on the one hand elements (63 and 64) for adjusting respectively the diaphragm stop and the sharpness of the lens (15) of the camera (2), and on the other hand an element (67) controlling the zoom, and a control element (69) for adjusting the camera (2) with respect to azimuth and/or elevation.

11. Equipment according to Claim 10, characterised in that the handles (61, 62) of the handlebar (6) also have an element (68) for controlling the reels (47) for the straps (40) and a control element (65a or 65b) designed to switch on a video recorder (18) being carried.

12. Equipment according to one of Claims 9 to 11, characterised in that the handlebar (60) is secured to the pole (3A) by means of a removable sleeve (43) suitable for enabling it to be fixed by clamping at different levels on the said pole (3A) according to a predetermined choice.

13. Equipment according to any one of the preceding claims, characterised in that the pole (3, 3A) can be folded on itself by telescopic effect and has at its base a cable reel (32) acting automatically by winding on it as the pole (3, 3A) is closed up at the end of filming.

14. Equipment according to any one of the preceding claims, characterised in that the camera (2) is disposed at the end of the pole (3, 3A) by means of a support (8), a fixed part (9) of which is secured to the said end whilst a movable part (10), able to pivot in azimuth and/or elevation with respect to the fixed part (9), carries the camera (2) and ensures its orientation by means of a control member (11) controlled by remote control means (6, 69) available to the operator (4).

15. Equipment according to Claim 14, characterised in that the control member (11) is an electric geared motor secured to the fixed part (9) of the support (8) and the rotary output shaft (12) of which is in mechanical connection with the camera (2).

16. Equipment according to Claim 15, characterised in that the output shaft (12) of the geared motor (11) is secured to the camera (2) by means of an arm rotatably mounted on the fixed part (9) of the support (8) in order to constitute its movable part (10) on which the said camera (2) is fixed.

17. Equipment according to Claim 14, characterised in that the control member (11) is a geared motor connected to the movable part (10) of the support (9) to which the camera is fixed (2) by means of a flexible cable suitable for transmitting the control movements by rotation on itself.

18. Equipment according to Claim 14, characterised in that the fixed part of the support for the camera (2) consists of a swivel on which a corresponding seat is able to articulate, secured to the movable part of the said support on which the camera (2) is mounted, or vice versa.

19. Equipment according to Claim 18, characterised in that the control means ensuring the orientation of the camera (2) with respect to azimuth and/or elevation consist of at least one traction cable disposed on the movable part of a support for the camera (2) with respect to the longitudinal axis of the swivel merging with that of the pole (3) and are connected to mechanical remote control means.

20. Equipment according to any one of Claims 14 to 17, characterised in that the remote control means for the geared motor (11) consist of at least one supply wire (13) disposed between an electrical energy source (14) and the said geared motor (11) by means of a polarity reversal switch (6, 69) or control handle placed within reach of the hand (5) of the operator (4).

21. Equipment according to any one of Claims 14 to 17, characterised in that the remote control means for the geared motor (11) consist of a transmitter and a receiver connected together by radio signals and which are supplied from an electrical energy source.

22. Equipment according to any one of the preceding claims, characterised in that it also includes a video recording device or video recorder (18) carried by the operator (4) and connected on the one hand with the camera (2) by a YC composite image cable (19) supplying a decoded video signal and on the other hand to the electrical energy source (14).

23. Equipment according to Claim 22, characterised in that an ocular viewfinder (20, 20a) or eyepiece monitor is interposed in the video circuit and made available to the operator (4).

24. Equipment according to Claim 22, characterised in that a monitor for controlling by portable screen (21) is interposed in the video circuit and made available to the operator (4).

25. Equipment according to any one of the preceding claims, characterised in that a lower part of the harness (26, 26A) forms a belt (27) surrounding the waist of the operator (4).

26. Equipment according to Claim 25, characterised in that the belt (27) is designed so as to be able to provide the fixing of a plurality of battery elements (28) disposed on its periphery and constituting the electrical energy source (14).

27. Equipment according to one of the preceding claims, characterised in that the harness (26, 26a) has a back part (29) forming a bag and in which the video recorder (18) can be loaded, and a chest part (30) on which is disposed, according to preferential comfort arrangements, all or some of the constituent parts such as: video control monitor (21); remote control (16) for adjusting the lens (15) of the camera (2), remote control (6) for the angular orientation of the camera (2); the components not carried by the harness (26, 26a) being carried by the pole (3, 3A) or the handlebar (60).

28. Equipment according to any one of the preceding claims, characterised in that it also comprises a sound pickup device, acting simultaneously with the filming.

29. Equipment according to Claim 21, characterised in that the ocular viewfinder (20a) is articulated on an articulated bracket (78) which is adjustable with respect to a fixed support adapted to the head of the operator (4).
